(19) Europäisches Patentamt / European Patent Office / Office européen des brevets

(11) **EP 1 606 035 B1**

(12) **FASCICULE DE BREVET EUROPEEN**

(45) Date de publication et mention
de la délivrance du brevet:
**20.07.2016 Bulletin 2016/29**

(51) Int Cl.:
***B01D 27/08*** *(2006.01)*     ***B01D 46/24*** *(2006.01)*
***B60H 3/06*** *(2006.01)*

(21) Numéro de dépôt: **04724036.1**

(22) Date de dépôt: **29.03.2004**

(86) Numéro de dépôt international:
**PCT/FR2004/050131**

(87) Numéro de publication internationale:
**WO 2004/087298 (14.10.2004 Gazette 2004/42)**

(54) **PROCEDE DE FABRICATION D'UN DISPOSITIF DE FILTRATION D'AIR, DISPOSITIF DE FILTRATION D'AIR ET INSTALLATION DE CIRCULATION D'AIR DANS UN VEHICULE AUTOMOBILE**

VERFAHREN ZUR HERSTELLUNG EINER LUFTFILTERVORRICHTUNG, LUFTFILTERVORRICHTUNG UND ANLAGE ZUR LUFTZIRKULATION IN EINEM FAHRZEUG

METHOD FOR MAKING AN AIR FILTER DEVICE, AIR FILTER DEVICE AND AIRFLOW INSTALLATION IN A MOTOR VEHICLE

(84) Etats contractants désignés:
**AT BE BG CH CY CZ DE DK EE ES FI FR GB GR HU IE IT LI LU MC NL PL PT RO SE SI SK TR**

(30) Priorité: **27.03.2003 FR 0303777**
**05.12.2003 FR 0314317**

(43) Date de publication de la demande:
**21.12.2005 Bulletin 2005/51**

(73) Titulaire: **Valeo Matériaux de Friction**
**87020 Limoges cedex 9 (FR)**

(72) Inventeurs:
• **BAZIRET, Gérard**
**F-61790 Saint Pierre du Regard (FR)**
• **BIDOT, Johann**
**F-14770 Le Plessis Grimoult (FR)**
• **BISSON, Laurent**
**F-14110 Conde sur Noireau (FR)**

(74) Mandataire: **Vieillevigne, Sébastien Nicolas Bernard et al**
**VALEO SYSTEMES THERMIQUES**
**Service Propriété Industrielle**
**8, rue Louis Lormand**
**La Verrière - B.P. 513**
**78321 Le Mesnil-Saint-Denis Cedex (FR)**

(56) Documents cités:
**EP-A- 0 542 396**    **EP-A2- 1 129 760**
**EP-B- 0 961 702**    **DE-A- 4 227 744**
**DE-A- 4 344 505**

EP 1 606 035 B1

## Description

La présente invention concerne un procédé de fabrication d'un dispositif de filtration d'air, un dispositif de filtration d'air et une installation de circulation d'air dans un véhicule automobile.

Elle s'applique en particulier à la filtration d'air circulant dans un véhicule automobile, notamment d'air climatisé ou non destiné à circuler dans l'habitacle du véhicule.

On connaît déjà dans l'état de la technique un dispositif de filtration d'air, du type comprenant un média filtrant relié à un support comprenant au moins une paroi plane de canalisation d'air ayant une épaisseur $e$ et une masse volumique $m_v$.

Le support peut comporter plus particulièrement deux ou quatre parois planes entre lesquelles s'étend le média filtrant. Ces parois, destinées notamment à la canalisation de l'air, sont sensiblement parallèles deux à deux, si bien que le média filtrant et les parois s'étendent dans un volume de forme générale parallélépipédique aplatie, les deux grandes faces de ce volume délimitant respectivement des faces passantes d'entrée et de sortie d'air.

Il est connu de fabriquer les parois de canalisation de l'air en matériau synthétique plus ou moins souple ou rigide.

Ainsi, dans ce qui suit, en considérant qu'une paroi de canalisation de l'air a une épaisseur $e$ et une masse volumique $m_v$, on qualifiera de "souple" une paroi dont le produit P de $e$ et $m_v$, dit produit de rigidité, vérifie la relation suivante, dite relation de souplesse :

$$P = e \cdot m_v \le 0,3 \ kg/m^2,$$

et de "rigide" une paroi dont le produit de rigidité P vérifie la relation suivante, dite relation de rigidité :

$$P = e \cdot m_v \ge 0,5 \ kg/m^2.$$

Il est connu de fabriquer les parois de canalisation de l'air en fibres synthétiques non tissées, par exemple en fibre de polyester. Dans ce cas, il est connu de relier le média filtrant aux parois de canalisation de l'air par apport de matière notamment une colle thermofusible ("hot melt" conformément à la terminologie anglo-saxonne). La colle est notamment une polyoléfine. La colle fondue est appliquée sur des surfaces de jonction complémentaires des parois de canalisation et du média filtrant. Puis, les surfaces de jonction complémentaires sont pressées l'une contre l'autre.

Les parois en fibres synthétiques non tissées, relativement souples avant leur collage, sont rigidifiées lors de la solidification de la colle.

Le coût de fabrication d'un dispositif de filtration comportant un média filtrant collé aux parois de canalisation de l'air comme décrit ci-dessus résulte, pour une partie non négligeable, du coût de la colle thermofusible rapportée sur les surfaces de jonction complémentaires du média filtrant et des parois de canalisation de l'air.

Parmi les matériaux synthétiques habituellement utilisés pour fabriquer les parois de canalisation de l'air, il est connu de recourir à une mousse synthétique, par exemple une mousse de polypropylène, comme cela est proposé dans EP-A-0 961 702. Dans ce cas, les parois de canalisation de l'air sont planes et relativement souples.

EP-A-0 961 702 propose de relier le média filtrant aux parois de canalisation de l'air par une opération de soudage thermique sans apport de matière, plus particulièrement une opération de soudage miroir de surfaces de jonction complémentaires des parois de canalisation et du média filtrant. L'opération de soudage miroir, décrite dans ce document, consiste à chauffer jusqu'à début de fusion les surfaces de jonction complémentaires du média filtrant et des parois de canalisation puis à presser ces surfaces de jonction les unes contre les autres pour les souder entre elles.

L'opération de soudage miroir engendre des contraintes mécaniques qui, du fait de la souplesse des parois de canalisation de l'air, n'ont pas d'effets conséquents sur la planéité de ces parois.

Toutefois, dans certains cas, l'utilisation d'un dispositif de filtration muni d'un média filtrant fixé à des parois de canalisation souples, telles que les parois en mousse synthétique décrites ci-dessus, n'est pas adaptée.

En particulier, l'utilisation d'un dispositif de filtration à parois de canalisation souples n'est pas adapté dans les cas suivants :

- le dispositif de filtration est soumis à des contraintes mécaniques importantes lors de son montage dans le logement correspondant du véhicule ;
- les dimensions des faces d'entrée et de sortie d'air du dispositif de filtration sont relativement importantes par rapport à la hauteur de ce dispositif (distance entre les faces d'entrée et de sortie d'air), la résistance mécanique du support comprenant les parois de canalisation devant être suffisante pour résister à l'écart de pression entre les faces d'entrée et de sortie d'air du dispositif, cet écart de pression pouvant atteindre, voire dépasser, 1000 Pa ;
- le dispositif de filtration est, après montage dans le logement correspondant du véhicule, en appui sur des surfaces de dimensions relativement faibles favorisant la déformation des parois de canalisation sous l'effet du propre poids du dispositif de filtration.

On souhaite donc pouvoir recourir, dans les cas précités, à un dispositif de filtration muni d'un média filtrant relié à des parois de canalisation d'air rigides, fabriquées par exemple en polypropylène.

Dans ce cas, le soudage thermique du média filtrant avec les parois de canalisation d'air s'avère inapproprié du fait des déformations qu'il engendre. En effet, les parois de canalisation déformées (elles ne sont plus planes à la suite du soudage thermique) ne permettent pas d'assurer un montage correct du média filtrant.

On a donc proposé, dans le cas de parois de canalisations rigides, de surmouler ces parois sur les surfaces de jonction correspondantes du média filtrant.

Toutefois, ce procédé de surmoulage ne permet pas d'obtenir des cadences de fabrication aussi rapides que pour la fabrication d'un dispositif de filtration à parois souples en mousse reliées au média filtrant par soudage miroir. Par ailleurs, ce procédé de surmoulage requiert la fabrication d'un moule adapté relativement peu coûteux.

L'invention a pour but de proposer un dispositif de filtration d'air muni de parois de canalisation de l'air rigides qui soit relativement simple et peu coûteux à fabriquer.

A cet effet, l'invention a pour objet un procédé de fabrication d'un dispositif de filtration d'air comprenant un média filtrant relié à un support comprenant au moins une paroi plane de canalisation d'air ayant une épaisseur e et une masse volumique $m_v$ dont le produit P, dit produit de rigidité, vérifie la relation suivante, dite relation de rigidité :

$$P = e \cdot m_v \geq 0,5 \text{ kg/m}^2,$$

P étant de préférence supérieur à 1 kg/m² voire supérieur à 2 kg/m², **caractérisé en ce que :**

- on relie le média filtrant à la paroi de canalisation étant fabriquée dans un matériau synthétique du type polymère thermoplastique, de forme initialement plane, par une opération de soudage thermique, sans apport de matière, d'une face de jonction de la paroi de canalisation avec une surface de jonction complémentaire du média filtrant, puis
- on réalise une opération de redressement d'au moins une extrémité de la paroi de canalisation déformée par cette opération de soudage thermique par chauffage de cette extrémité déformée de façon à la redresser pour sensiblement rendre à la paroi de canalisation sa forme initiale plane.

L'opération de redressement par chauffage de chaque extrémité déformée de paroi de canalisation peut être réalisée avec des moyens simples permettant d'obtenir une cadence de fabrication des dispositifs de filtration relativement rapide. De plus le procédé de fabrication selon l'invention ne nécessite pas d'apport de matière.

Suivant d'autres caractéristiques optionnelles de différents modes de réalisation de ce procédé :

- on chauffe l'extrémité de la paroi déformée à une température correspondant sensiblement à la température $T_f$ de fusion du matériau constituant la paroi de canalisation d'air, pendant une durée de 5 à 15 s ;
- on chauffe l'extrémité de la paroi déformée en la soumettant à un flux d'air chaud ;
- la température du flux d'air chaud peut atteindre voire dépasser 150°C ;
- on chauffe l'extrémité de la paroi déformée par un flux de rayonnement ;
- l'extrémité de la paroi déformée est soumise au flux de rayonnement d'une lampe dont la puissance peut atteindre, voire dépasser, 600 W ;
- l'opération de soudage thermique est une opération de soudage miroir ;
- au cours de l'opération de soudage miroir, la face de jonction de la paroi de canalisation est chauffée par contact avec une plaque chauffante pendant 5 à 10 s, cette plaque chauffante étant portée à une température T vérifiant la relation suivante :

$$T = T_f + \Delta T$$

dans laquelle $T_f$ est la température de fusion du matériau constituant la paroi de canalisation d'air et $\Delta T$ a une valeur comprise entre 150 et 250°C, de préférence égale à 200°C ;
- l'opération de soudage thermique est une opération de soudage par un rayonnement infra-rouge ;
- au cours de l'opération de soudage par rayonnement infra-rouge, au moins la face de jonction de la paroi de canalisation d'air est chauffée pendant 5 à 10 s par une lampe émettant un rayonnement infra-rouge, notamment une lampe au néon, ayant une puissance pouvant atteindre, voire dépasser, 2000 W ;
- l'opération de soudage thermique est une opération de soudage par ultra-sons ;
- au cours de l'opération de soudage par ultra-sons, on dispose le dispositif de filtration d'air entre deux organes fonctionnellement complémentaires

formant l'un une sonotrode en contact avec la paroi de canalisation d'air et l'autre une enclume en contact avec le média filtrant.

L'invention a encore pour objet un dispositif de filtration d'air selon la revendication 13.

Suivant d'autres caractéristiques optionnelles de différents modes de réalisation de ce dispositif de filtration d'air :

- le support comprend deux parois planes de canalisation d'air sensiblement parallèles entre elles, dites longitudinales, vérifiant la relation de rigidité, le média filtrant s'étendant entre ces parois longitudinales ;
- le support comprend de plus deux parois planes de canalisation d'air sensiblement parallèles entre elles, dites transversales, vérifiant la relation de rigidité, les parois transversales étant sensiblement perpendiculaires aux parois longitudinales de façon à former sensiblement un parallélépipède rectangle ;

- chaque paroi plane de canalisation d'air est fabriquée dans un matériau synthétique du type polymère thermoplastique ;

- le polymère thermoplastique est choisi parmi un polypropylène, un polyéthylène, un polyamide, un polyester, notamment un polytéréphtalate d'éthylène ou de butylène, et un polycarbonate ;

- le média filtrant est muni d'une couche de matériau en grains intercalée entre deux voiles en matériau synthétique, le média filtrant étant délimité par au moins un bord libre, les deux voiles étant jointifs le long du bord libre.

L'invention a également pour objet une installation de circulation d'air dans un véhicule automobile, **caractérisée en ce qu**'elle comprend un dispositif de filtration tel que défini ci-dessus.

Suivant une autre caractéristique optionnelle de cette installation, celle-ci approvisionne un habitacle du véhicule en air climatisé ou non.

L'invention sera mieux comprise à la lecture de la description qui va suivre, donnée uniquement à titre d'exemple et faite en se référant aux dessins dans lesquels :

- la figure 1 est une vue en perspective d'un dispositif de filtration selon un premier mode de réalisation de l'invention ;

- la figure 2 est une vue de détail en coupe transversale d'un bord libre d'un média filtrant du dispositif de filtration représenté sur la figure 1 ;

- la figure 3 est une vue de dessus du dispositif de filtration représenté sur la figure 1 placé dans un dispositif pour redresser des extrémités de chaque paroi de canalisation d'air déformées par l'opération de soudage thermique ;

- la figure 4 est une vue de dessus du dispositif de filtration représenté sur la figure 1 après redressement des extrémités déformées de chaque paroi de canalisation d'air ;

- les figures 5 et 6 sont des vues similaires aux figures 3 et 4 d'un dispositif de filtration selon un second mode de réalisation de l'invention.

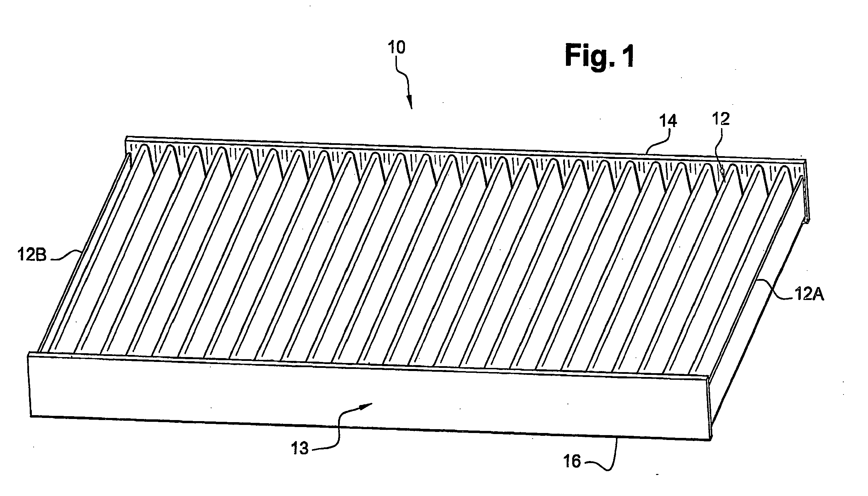

On a représenté sur la figure 1 un dispositif de filtration d'air selon un premier mode de réalisation de l'invention, désigné par la référence générale 10.

Le dispositif de filtration 10 est destiné par exemple à être agencé dans une installation de circulation d'air dans un véhicule automobile afin notamment d'approvisionner un habitacle de ce véhicule en air climatisé ou non.

Le dispositif de filtration 10 comprend un média filtrant 12, plié en accordéon, relié à un support 13 comportant deux parois planes 14, 16 entre lesquelles il s'étend. Ces parois 14, 16, dites longitudinales, sont sensiblement parallèles et sont destinés notamment à la canalisation de l'air. Les parois 14, 16 s'étendent sensiblement perpendiculairement à la direction des lignes de pliage du média filtrant.

On notera que le média filtrant 12 et les parois 14, 16 s'étendent dans un volume de forme générale parallélépipédique aplatie, les deux grandes faces de ce volume délimitant respectivement des faces passantes d'entrée et de sortie d'air.

Le média filtrant 12 comporte deux bords libres sensiblement rectilignes et parallèles à la direction des lignes de pliage du média filtrant 12. Ces bords libres sont désignés par les références 12A, 12B.

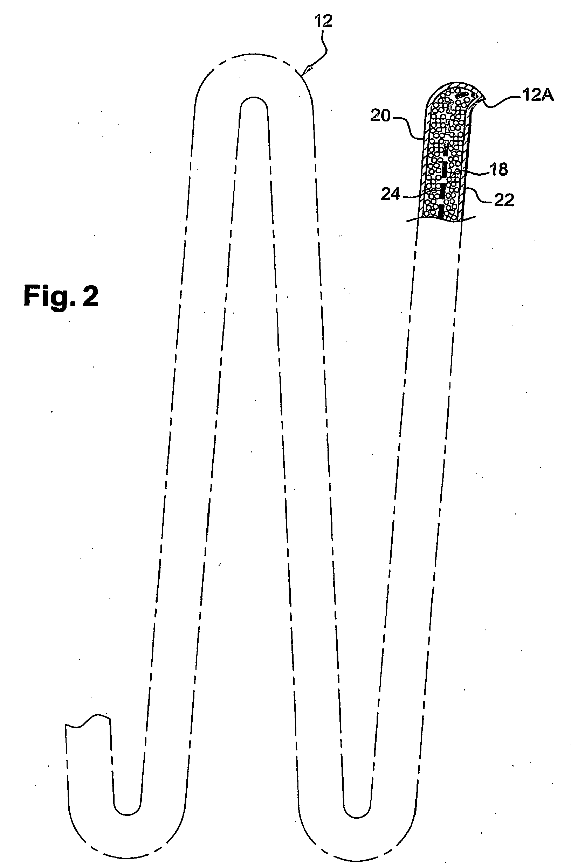

En se référant notamment à la figure 2, on voit que le média filtrant 12 est muni d'une couche 18 de matériau en grains intercalée entre deux voiles 20, 22 en matériau synthétique. Afin d'éviter l'écoulement des grains à travers les bords libres 12A, 12B du média filtrant, les deux voiles 20, 22 sont jointifs le long de chaque bord libre 12A, 12B.

De préférence, le média filtrant 12 comprend également une armature souple 24 qui, dans l'exemple décrit, a une forme générale de grille. L'armature souple 24 est noyée dans la couche de matériau en grains.

De préférence, l'armature souple 24 est en matériau synthétique, plus particulièrement - dans l'exemple décrit - en polypropylène.

Dans l'exemple décrit, chacun des voiles 20, 22 comprend des fibres de polypropylène. La structure de ces voiles est classique.

Par ailleurs, le matériau en grains, de type classique, comprend, dans l'exemple illustré, des granulés de charbon actif.

Chacun des bords libres 12A, 12B est formé par découpage par ultrasons. Cette seule opération à la fois de souder les deux voiles 20, 22 en matériau synthétique et de couper ces deux voiles 20, 22 sensiblement au milieu de la zone soudée, ceci pour rendre jointifs les deux voiles le long du bord libre 12A, 12B découpé.

Les deux voiles en matériau synthétique étant jointifs le long du bord libre, les grains sont retenus efficacement dans le média filtrant, ceci sans qu'il soit nécessaire de rapporter de colle ou de baguette sur le bord libre.

Les parois longitudinales 14, 16 ont une épaisseur $\underline{e}$ et une masse volumique $m_v$ dont le produit P, dit produit de rigidité, vérifie la relation suivante, dite relation de rigidité :

$$P = e \cdot m_v \geq 0,5 \ \text{kg/m}^2.$$

P est de préférence supérieur à 1 kg/m² voire supérieur à 2 kg/m².

Les parois longitudinales 14, 15 sont fabriquées dans un matériau synthétique du type polymère thermoplastique.

De préférence, les parois longitudinales 14, 16 sont en polypropylène, par exemple en polypropylène extrudé (présentant une très faible porosité) pour lequel $m_v$ = 940 kg/m³ et $\underline{e}$ = 2,5 mm.

Toutefois, le polymère thermoplastique peut être choisi parmi un polypropylène, un polyéthylène, un polyamide, un polyester, notamment un polytéréphtalate d'éthylène ou de butylène, et un polycarbonate.

Ainsi, on pourra choisir des parois longitudinales 14, 16 en polyéthylène sous la forme d'une mousse relativement épaisse pour laquelle $m_v$ = 130 kg/m³ et $\underline{e}$ = 5 mm.

On décrira ci-dessous un procédé selon l'invention pour la fabrication du dispositif de filtration 10.

Tout d'abord, on relie le média filtrant aux deux parois longitudinales 14, 16, de forme initialement plane, par une opération de soudage thermique, sans apport de matière, d'une face de jonction FJ de chaque paroi longitudinale 14, 16 avec une surface de jonction complémentaire SJ du média filtrant 12.

Bien entendu, les matériaux synthétiques constituant le média filtrant 12 et les parois longitudinales 14, 16 sont choisis de façon à être compatibles entre eux pour permettre l'opération de soudage thermique.

Selon un premier mode de réalisation de l'opération de soudage thermique, cette dernière est une opération de soudage miroir au cours de laquelle, de préférence, la face de jonction FJ de chaque paroi longitudinale 14, 16 est chauffée par contact avec une plaque chauffante pendant 5 à 10 s.

Dans l'exemple décrit, la plaque chauffante est portée à une température T vérifiant la relation suivante :

$$T = T_f + \Delta T$$

dans laquelle $T_f$ est la température de fusion du matériau constituant la paroi de canalisation d'air et $\Delta t$ a une valeur comprise entre 150 et 250°C , de préférence égale à environ 200°C dans le cas des parois longitudinales en polypropylène.

Par ailleurs, les surfaces de jonction SJ du média filtrant 12 sont également chauffées dans des conditions similaires aux faces de jonction FJ des parois longitudinales 14, 16, par contact avec des plaques chauffantes correspondantes.

Après chauffage des faces de jonction FJ des parois longitudinales 14, 16 et des surfaces de jonction complémentaires SJ du média filtrant 12, on presse ces faces FJ et surfaces SJ complémentaires les unes contre les autres pour les souder entre elles.

L'opération de soudage miroir laisse subsister des traces de coulures des matériaux en fusion qui sont caractéristiques de ce soudage miroir et qui subsistent généralement sur le dispositif de filtration fini.

Selon un deuxième mode de réalisation de l'opération de soudage thermique, cette dernière est une opération de soudage par un rayonnement infra-rouge au cours de laquelle au moins une face de jonction FJ de chaque paroi longitudinale 14, 16 est chauffée pendant 5 à 10 s (s = seconde) par une lampe émettant un rayonnement infra-rouge. Dans l'exemple décrit, cette lampe est du type au néon et a une puissance pouvant atteindre, voire dépasser, 2000 W.

A la suite du soudage par rayonnement infra-rouge, on peut observer que le média filtrant 12 s'est légèrement enfoncé dans les parois longitudinales 14, 16, en particulier de façon plus importante que dans le cas du soudage miroir.

Le cas échéant, la surface de jonction SJ du média filtrant 12 peut être également chauffée dans des conditions similaires à la face de jonction FJ des parois 14, 16, par exposition à une lampe émettant un rayonnement infra-rouge.

Selon un troisième mode de réalisation de l'opération de soudage thermique, cette dernière est une opération de soudage par ultra-sons au cours de laquelle on dispose le dispositif de filtration d'air 10 entre deux organes fonctionnellement complémentaires formant l'un une sonotrode en contact avec la face opposée à la face de jonction FJ de chaque paroi longitudinale 14, 16 et l'autre une enclume en contact avec le média filtrant 12.

L'opération de soudage par ultra-sons laisse subsister des traces de coulures des matériaux en fusion qui sont caractéristiques de ce soudage par ultra-sons et qui subsistent sur le dispositif de filtration fini.

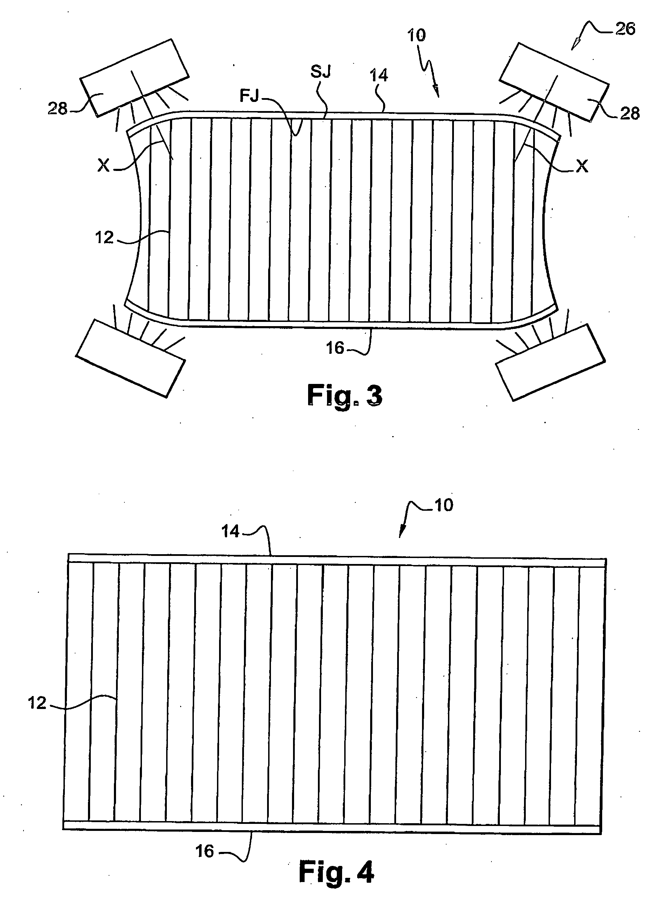

Du fait que les parois longitudinales 14, 16 sont rigides, l'opération de soudage thermique provoque une déformation de leurs extrémités, si bien que ces parois 14, 16 ne sont plus planes, comme cela est représenté sur la figure 3.

On réalise donc, à la suite de l'opération de soudage thermique, une opération de redressement de chaque extrémité de paroi longitudinale 14, 16 déformée par l'opération de soudage thermique.

Cette opération de redressement est réalisée par chauffage de chaque extrémité déformée de paroi longitudinale 14, 16 de façon à redresser cette extrémité pour sensiblement rendre à chaque paroi longitudinale 14, 16 sa forme initiale plane comme cela est représenté sur la figure 4.

L'opération de redressement permet de limiter le défaut de planéité à une valeur inférieure ou égale à 0,5 mm .

On a représenté sur la figure 3 un dispositif 26 pour la mise en oeuvre de l'opération de redressement.

Ce dispositif 26 comprend une source de chaleur 28 associée à chaque extrémité de paroi longitudinale 14, 16 déformée par l'opération de soudage thermique.

Chaque source de chaleur 28 émet de préférence un flux d'air chaud ou de rayonnement dans une direction générale X qui est, lorsque l'on considère la paroi longitudinale 14, 16 après l'opération de redressement, inclinée, voire perpendiculaire, par rapport à la face de cette paroi 14, 16 opposée à la face de jonction FJ.

Chaque source de chaleur 28 est placée de préférence à une distance de la paroi 14, 16 correspondante comprise entre 10 et 30 mm.

De préférence, au cours de l'opération de redressement, on chauffe chaque extrémité déformée de paroi 14, 16 à une température correspondant sensiblement à la température $T_f$ de fusion du matériau constituant la paroi 14, 16 pendant une durée de 5 à 15s.

Selon un premier mode de réalisation de l'opération de redressement, on chauffe l'extrémité déformée de chaque paroi longitudinale 14, 16 en la soumettant à un flux d'air chaud émis par la source de chaleur correspondante 28. Dans ce cas, la température du flux d'air chaud peut atteindre, voire dépasser, 150°C.

Selon un second mode de réalisation de l'opération de redressement, on chauffe l'extrémité déformée de chaque paroi 14, 16 par un flux de rayonnement émis par la source de chaleur correspondante 28. De préférence, le flux de rayonnement est émis par une lampe formant la source de chaleur 28 dont la puissance peut atteindre, voire dépasser, 600 W.

On notera que, à la suite de l'opération de redressement, on peut observer sur les faces des parois longitudinales 14, 16 opposées à leurs faces de jonction FJ un changement de brillance entre les zones des parois 14, 16 soumises et non soumises au chauffage de redressement. En effet, la zone chauffée est plus brillante que celle non chauffée.

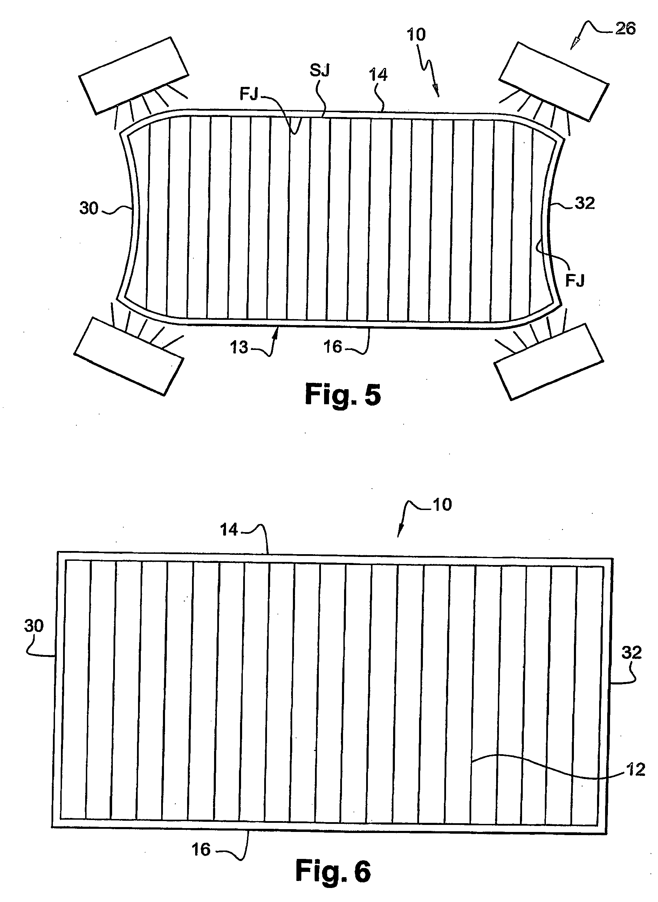

On a représenté sur les figures 5 et 6 un dispositif de filtration 10 selon un second mode de réalisation de l'invention. Sur ces figures 5 et 6, les éléments analogues à ceux des figures précédentes sont désignés par des références identiques.

Dans ce cas, le support 13 du dispositif de filtration 10 comprend de plus deux parois planes de canalisation d'air sensiblement parallèles entre elles, dites transversales 30, 32, entre lesquelles s'étend le média filtrant 12. Les parois transversales 30, 32 sont adjacentes et sensiblement perpendiculaires aux parois longitudinales 14, 16 de façon à former sensiblement un parallélépipède rectangle.

Les parois transversales 30, 32 vérifient, comme les parois longitudinales 14, 16, la relation de rigidité.

Le dispositif de filtration 10 selon le second mode de réalisation de l'invention, représenté sur la figure 6, peut être fabriqué par un procédé analogue, mutatis mutandis, au procédé de fabrication du dispositif 10 selon le premier mode de réalisation de l'invention représenté sur les figures 1 à 4.

En particulier, après l'opération de soudage thermique, les extrémités déformées des parois longitudinales 14, 16 et transversales 30, 32 peuvent être redressées de façon à recouvrer leur forme initiale plane par une opération de redressement mise en oeuvre par le dispositif 28 représenté sur la figure 5.

Le support 13 peut comprendre une seule paroi plane de canalisation vérifiant la relation de rigidité.

## Revendications

**1.** Procédé de fabrication d'un dispositif de filtration d'air comprenant un média filtrant relié à un support (13) comprenant au moins une paroi plane de canalisation d'air (14, 16; 30, 32) ayant une épaisseur $\underline{e}$ et une masse volumique $m_v$ dont le produit P, dit produit de rigidité, vérifie la relation suivante, dite relation de rigidité :

$$P = e \cdot m_v \geq 0{,}5 \ kg/m^2,$$

P étant de préférence supérieur à 1 kg/m² voire supérieur à 2 kg/m², **caractérisé en ce que :**

- on relie le média filtrant (12) à la paroi de canalisation (14, 16; 30, 32) étant fabriquée dans un matériau synthétique du type polymère thermoplastique, de forme initialement plane, par une opération de soudage thermique, sans apport de matière, d'une face de jonction (FJ) de la paroi de canalisation (14, 16; 30, 32) avec une surface de jonction (SJ) complémentaire du média filtrant (12), puis
- on réalise une opération de redressement d'au moins une extrémité de la paroi de canalisation (14, 16; 30, 32) déformée par cette opération de soudage thermique par chauffage de cette extrémité déformée de façon à la redresser pour sensiblement rendre à la paroi de canalisation (14, 16; 30, 32) sa forme initiale plane.

**2.** Procédé selon la revendication 1, **caractérisé en ce que** l'on chauffe l'extrémité de la paroi déformée à une température correspondant sensiblement à la température $T_f$ de fusion du matériau constituant la paroi de canalisation (14, 16; 30, 32) d'air, pendant une durée de 5 à 15 s.

**3.** Procédé selon la revendication 1 ou 2, **caractérisé en ce que** l'on chauffe l'extrémité de la paroi déformée (14, 16; 30, 32) en la soumettant à un flux d'air chaud.

**4.** Procédé selon la revendication 3, **caractérisé en ce que** la température du flux d'air chaud peut atteindre voire dépasser 150°C.

**5.** Procédé selon la revendication 1 ou 2, **caractérisé en ce que** l'on chauffe l'extrémité de la paroi déformée (14, 16; 30, 32) par un flux de rayonnement.

6. Procédé selon la revendication 5, **caractérisé en ce que** l'extrémité de la paroi déformée (14, 16; 30, 32) est soumise au flux de rayonnement d'une lampe dont la puissance peut atteindre, voire dépasser, 600 W.

7. Procédé selon l'une quelconque des revendications 1 à 6, **caractérisé en ce que** l'opération de soudage thermique est une opération de soudage miroir.

8. Procédé selon la revendication 7, **caractérisé en ce que**, au cours de l'opération de soudage miroir, la face de jonction (FJ) de la paroi de canalisation (14, 16; 30, 32) est chauffée par contact avec une plaque chauffante pendant 5 à 10 s, cette plaque chauffante étant portée à une température T vérifiant la relation suivante :

$$T = T_f + \Delta T$$

dans laquelle $T_f$ est la température de fusion du matériau constituant la paroi de canalisation (14, 16; 30, 32) d'air et $\Delta T$ a une valeur comprise entre 150 et 250°C, de préférence égale à 200°C.

9. Procédé selon l'une quelconque des revendications 1 à 6, **caractérisé en ce que** l'opération de soudage thermique est une opération de soudage par un rayonnement infra-rouge.

10. Procédé selon la revendication 9, **caractérisé en ce que**, au cours de l'opération de soudage par rayonnement infra-rouge, au moins la face de jonction (FJ) de la paroi de canalisation (14, 16; 30, 32) d'air est chauffée pendant 5 à 10 s par une lampe émettant un rayonnement infra-rouge, notamment une lampe au néon, ayant une puissance pouvant atteindre, voire dépasser, 2000 W.

11. Procédé selon l'une quelconque des revendications 1 à 6, **caractérisé en ce que** l'opération de soudage thermique est une opération de soudage par ultrasons.

12. Procédé selon la revendication 11, **caractérisé en ce que**, au cours de l'opération de soudage par ultrasons, on dispose le dispositif de filtration d'air (10) entre deux organes fonctionnellement complémentaires formant l'un une sonotrode en contact avec la paroi de canalisation (14, 16; 30, 32) d'air et l'autre une enclume en contact avec le média filtrant (12).

13. Dispositif de filtration d'air, du type comprenant un média filtrant (12) relié à un support (13) comprenant au moins une paroi plane de canalisation (14, 16; 30, 32) d'air ayant une épaisseur $\underline{e}$ et une masse volumique $m_v$ dont le produit P, dit produit de rigidité, vérifie la relation suivante, dite relation de rigidité :

$$P = e \, . \, m_v \geq 0,5 \text{ kg/m}^2,$$

P étant de préférence supérieur à 1 kg/m² voire supérieur à 2 kg/m², la paroi de canalisation (14, 16; 30, 32) étant fabriquée dans un matériau synthétique du type polymère thermoplastique et étant reliée au média filtrant (12) sans apport de matière, par une soudure thermique **caractérisé en ce que** le média filtrant (12) est muni d'une couche (18) de matériau en grains intercalée entre deux voiles (20, 22) en matériau synthétique, le média filtrant (12) étant délimité par au moins un bord libre (12A, 12B), les deux voiles (20, 22) étant jointifs le long du bord libre.

14. Dispositif de filtration d'air selon la revendication 13, **caractérisé en ce que** le support (13) comprend deux parois planes de canalisation d'air (14, 16) sensiblement parallèles entre elles, dites longitudinales, vérifiant la relation de rigidité, le média filtrant (12) s'étendant entre ces parois longitudinales.

15. Dispositif de filtration d'air selon la revendication 14, **caractérisé en ce que** le support (13) comprend de plus deux parois planes de canalisation d'air (30, 32) sensiblement parallèles entre elles, dites transversales, vérifiant la relation de rigidité, les parois transversales (30, 32) étant sensiblement perpendiculaires aux parois longitudinales (16, 14) de façon à former sensiblement un parallélépipède rectangle.

16. Dispositif de filtration d'air selon l'une quelconque des revendications 13 à 15, **caractérisé en ce que** chaque paroi plane de canalisation (14, 16; 30, 32) d'air est fabriquée dans un matériau synthétique du type polymère thermoplastique.

17. Dispositif de filtration d'air selon la revendication 16, **caractérisé en ce que** le polymère thermoplastique est choisi parmi un polypropylène, un polyéthylène, un polyamide, un polyester, notamment un polytéréphtalate d'éthylène ou de butylène, et un polycarbonate.

18. Installation de circulation d'air dans un véhicule automobile, **caractérisée en ce qu'**elle comprend un dispositif de filtration (10) selon l'une quelconque des revendications 13 à 17

19. Installation selon la revendication 18, **caractérisée en ce qu'**elle approvisionne un habitacle du véhicule en air climatisé ou non.

**Patentansprüche**

1. Verfahren zum Herstellen einer Luftfilterungsvorrichtung, die ein Filtermedium umfasst, das mit einem Träger (13) verbunden ist, der wenigstens eine ebene Luftkanalisierungswand (14, 16; 30, 32) umfasst, die eine Dicke e und eine Dichte $m_v$ hat, deren Produkt P, das Steifigkeitsprodukt genannt wird, die folgende Beziehung, die Steifigkeitsbeziehung genannt wird, erfüllt:

$$P = e \cdot m_v \geq 0,5 \ kg/m^2,$$

wobei P vorzugsweise größer als 1 kg/m$^2$, sogar größer als 2 kg/m$^2$ ist,
**dadurch gekennzeichnet, dass**:

   - das Filtermedium (12) mit der Kanalisierungswand (14, 16, 30, 32), die aus einem Kunststoff des Typs thermoplastisches Polymer hergestellt ist und anfangs eine ebene Form besitzt, durch einen Vorgang des Wärmeschweißens ohne Materialeintrag einer Verbindungsfläche (FJ) der Kanalisierungswand (14, 16; 30, 32) mit einer komplementären Wand (SJ) des Filtermediums (12) verbunden wird und dann
   - ein Vorgang des erneuten Ausrichtens wenigstens eines Endes der Kanalisierungswand (14, 16; 30, 32), die durch diesen Wärmeschweißvorgang verformt ist, durch Erwärmen dieses verformten Endes ausgeführt wird, derart, dass es wieder ausgerichtet wird, um der Kanalisierungswand (14, 16; 30, 32) im Wesentlichen wieder ihre ursprüngliche ebene Form zu verleihen.

2. Verfahren nach Anspruch 1, **dadurch gekennzeichnet, dass** das Ende der verformten Wand während einer Dauer von 5 bis 15 s auf eine Temperatur, die im Wesentlichen der Schmelztemperatur $T_f$ des Materials entspricht, die die Luftkanalisierungswand (14, 16; 30, 32) bildet, erwärmt wird.

3. Verfahren nach Anspruch 1 oder 2, **dadurch gekennzeichnet, dass** das Ende der verformten Wand (14, 16; 30, 32) erwärmt wird, indem es einem heißen Luftstrom ausgesetzt wird.

4. Verfahren nach Anspruch 3, **dadurch gekennzeichnet, dass** die Temperatur des heißen Luftstroms 150 °C erreichen oder sogar überschreiten kann.

5. Verfahren nach Anspruch 1 oder 2, **dadurch gekennzeichnet, dass** das Ende der verformten Wand (14, 16; 30, 32) durch einen Strahlungsfluss erwärmt wird.

6. Verfahren nach Anspruch 5, **dadurch gekennzeichnet, dass** das Ende der verformten Wand (14, 16; 30, 32) einem Strahlungsfluss einer Lampe, deren Leistung 600 W erreichen oder sogar überschreiten kann, ausgesetzt wird.

7. Verfahren nach einem der Ansprüche 1 bis 6, **dadurch gekennzeichnet, dass** der Wärmeschweißvorgang ein Spiegelschweißvorgang ist.

8. Verfahren nach Anspruch 7, **dadurch gekennzeichnet, dass** während des Spiegelschweißvorgangs die Verbindungsfläche (FJ) der Kanalisierungswand (14, 16; 30, 32) durch Kontakt mit einer Heizplatte während 5 bis 10 s erwärmt wird, wobei diese Heizplatte auf einer Temperatur T gehalten wird, die die folgende Beziehung erfüllt:

$$T = T_f + \Delta T,$$

wobei $T_f$ die Schmelztemperatur des Materials ist, das die Luftkanalisierungswand (14, 16; 30, 32) bildet, und $\Delta T$ einen Wert im Bereich von 150 bis 250 °C hat und vorzugsweise gleich 200 °C ist.

9. Verfahren nach einem der Ansprüche 1 bis 6, **dadurch gekennzeichnet, dass** der Wärmeschweißvorgang ein Schweißvorgang durch Infrarotstrahlung ist.

10. Verfahren nach Anspruch 9, **dadurch gekennzeichnet, dass** während des Schweißvorgangs durch Infrarotstrahlung wenigstens die Verbindungsfläche (FJ) der Luftkanalisierungswand (14, 16; 30, 32) während 5 bis 10 s durch eine Lampe, die Infrarotstrahlung aussendet, insbesondere eine Neonlampe, die eine Leistung hat, die 2000 W erreichen oder sogar überschreiten kann, erwärmt wird.

11. Verfahren nach einem der Ansprüche 1 bis 6, **dadurch gekennzeichnet, dass** der Wärmeschweißvorgang ein Ultraschall-Schweißvorgang ist.

12. Verfahren nach Anspruch 11, **dadurch gekennzeichnet, dass** während des Ultraschall-Schweißvorgangs die Luftfilterungsvorrichtung (10) zwischen zwei funktional komplementären Organen, wovon eine eine Sonotrode in Kontakt mit der Luftkanalisierungswand (14, 16; 30, 32) bildet und die andere einen Amboss in Kontakt mit dem Filtermedium (12) bildet, angeordnet ist.

**13.** Luftfilterungsvorrichtung des Typs, der ein Filtermedium (12) enthält, das mit einem Träger (13) verbunden ist, der wenigstens eine ebene Luftkanalisierungswand (14, 16; 30, 32) enthält, die eine Dicke $\underline{e}$ und eine Dichte $m_v$ besitzt, deren Produkt P, das Steifigkeitsprodukt genannt wird, die folgende Beziehung, die Steifigkeitsbeziehung genannt wird, erfüllt:

$$P = e \cdot m_v \geq 0{,}5 \ \mathrm{kg/m}^2,$$

wobei P vorzugsweise größer als 1 kg/m² , sogar größer als 2 kg/m² ist, wobei die Kanalisierungswand (14, 16; 30, 32) aus einem Kunststoff des Typs thermoplastisches Polymer hergestellt ist und mit dem Filtermedium (12) ohne Wärmeeintrag durch Wärmeschweißen verbunden ist, **dadurch gekennzeichnet, dass** das Filtermedium (12) mit einer Schicht (18) aus körnigem Material versehen ist, die zwischen zwei Lagen (20, 22) aus Kunststoff eingefügt ist, wobei das Filtermedium (12) durch wenigstens einen freien Rand (12A, 12B) begrenzt ist, wobei die zwei Lagen (20, 22) längs des freien Randes miteinander verbunden sind.

**14.** Luftfilterungsvorrichtung nach Anspruch 13, **dadurch gekennzeichnet, dass** der Träger (13) wenigstens zwei ebene Luftkanalisierungswände (14, 16) umfasst, die im Wesentlichen zueinander parallel sind und longitudinale Wände genannt werden, die die Steifigkeitsbeziehung erfüllen, wobei das Filtermedium (12) sich zwischen diesen longitudinalen Wänden erstreckt.

**15.** Luftfilterungsvorrichtung nach Anspruch 14, **dadurch gekennzeichnet, dass** der Träger (13) außerdem zwei ebene Luftkanalisierungswände (30, 32) umfasst, die im Wesentlichen zueinander parallel sind, transversal genannt werden und die Steifigkeitsbeziehung erfüllen, wobei die transversalen Wände (30, 32) zu den longitudinalen Wänden (16, 14) im Wesentlichen senkrecht sind, derart, dass sie im Wesentlichen ein rechtwinkliges Parallelepiped bilden.

**16.** Luftfilterungsvorrichtung nach einem der Ansprüche 13 bis 15, **dadurch gekennzeichnet, dass** jede ebene Luftkanalisierungswand (14, 16; 30, 32) aus einem Kunststoff des Typs thermoplastisches Polymer hergestellt ist.

**17.** Luftfilterungsvorrichtung nach Anspruch 16, **dadurch gekennzeichnet, dass** das thermoplastische Polymer aus Polypropylen, Polyethylen, Polyamid, Polyester, insbesondere Ethylen-Polyterephthalat oder Butylen-Polyterephthalat, und Polycarbonat gewählt ist.

**18.** Luftumwälzanlage in einem Kraftfahrzeug, **dadurch gekennzeichnet, dass** sie eine Filterungsvorrichtung (10) nach einem der Ansprüche 13 bis 17 umfasst.

**19.** Anlage nach Anspruch 18, **dadurch gekennzeichnet, dass** sie eine Fahrgastzelle eines Fahrzeugs mit klimatisierter oder nicht klimatisierter Luft versorgt.

## Claims

**1.** Method for manufacturing an air filtration device comprising a filter medium connected to a support (13) comprising at least one flat air pipe wall (14, 16; 30, 32) of thickness $\underline{e}$ and density $m_v$ of which the product P, referred to as the product of rigidity, satisfies the following relationship, referred to as the rigidity relationship:

$$P = e \times m_v \geq 0.5 \ \mathrm{kg/m}^2$$

P preferably being greater than 1 kg/m² even greater than 2 kg/m²,
**characterized in that**:

- the filter medium (12) is connected to the pipe wall (14, 16; 30, 32), made from a synthetic material of the thermoplastic polymer type, of initially planar shape, using a thermal welding operation, without the addition of material, welding a junction face (FJ) of the pipe wall (14, 16; 30, 32) to a complementary junction surface (SJ) of the filter medium (12), then
- an operation of straightening at least one end of the pipe wall (14, 16; 30, 32) that has become deformed through this thermal welding operation is performed by heating this deformed end so that it can be straightened in order more or less to return the pipe wall (14, 16; 30, 32) to its planar initial shape.

**2.** Method according to Claim 1, **characterized in that** the end of the deformed wall is heated to a temperature more or less corresponding to the melting point $T_f$ of the material of which the air pipe wall (14, 16; 30, 32) is made, for a duration of 5 to 15 s.

**3.** Method according to Claim 1 or 2, **characterized in that** the end of the deformed wall (14, 16; 30, 32) is heated by subjecting it to a flow of hot air.

**4.** Method according to Claim 3, **characterized in that** the temperature of the flow of hot air may reach or even exceed 150°C.

5. Method according to Claim 1 or 2, **characterized in that** the end of the deformed wall (14, 16; 30, 32) is heated by a stream of radiation.

6. Method according to Claim 5, **characterized in that** the end of the deformed wall (14, 16; 30, 32) is subjected to the stream of radiation from a lamp the power of which may reach or even exceed 600 W.

7. Method according to any one of Claims 1 to 6, **characterized in that** the thermal welding operation is a mirror welding operation.

8. Method according to Claim 7, **characterized in that**, during the mirror welding operation, the junction face (FJ) of the pipe wall (14, 16; 30, 32) is heated by contact with a heating plate for 5 to 10 s, this heating plate being raised to a temperature T that satisfies the following relationship:

$$T = T_f + \Delta T$$

in which $T_f$ is the melting point of the material of which the air pipe wall (14, 16; 30, 32) is made and $\Delta T$ has a value of between 150 and 250°C, preferably equal to 200°C.

9. Method according to any one of Claims 1 to 6, **characterized in that** the thermal welding operation is a welding operation using infrared radiation.

10. Method according to Claim 9, **characterized in that**, during the infrared radiation welding operation, at least the junction face (FJ) of the air pipe wall (14, 16; 30, 32) is heated for 5 to 10 s by a lamp emitting infrared radiation, notably a neon lamp, having a power that may reach or even exceed 2000 W.

11. Method according to any one of Claims 1 to 6, **characterized in that** the thermal welding operation is an ultrasonic welding operation.

12. Method according to Claim 11, **characterized in that**, during the ultrasonic welding operation, the air filtration device (10) is placed between two functionally complementary components one of them forming a sonotrode in contact with the air pipe wall (14, 16; 30, 32) and the other forming an anvil in contact with the filter medium (12).

13. Air filtration device of the type comprising a filter medium (12) connected to a support (13) comprising at least one flat air pipe wall (14, 16; 30, 32) of thickness

$e$ and density $m_v$ of which the product P, referred to as the product of rigidity, satisfies the following relationship, referred to as the rigidity relationship:

$$P = e \times m_v \geq 0.5 \ \text{kg/m}^2$$

P preferably being greater than 1 kg/m² even greater than 2 kg/m², the pipe wall (14, 16; 30, 32) being made from a synthetic material of the thermoplastic polymer type and being connected to the filter medium (12) without the addition of material, by thermal welding **characterized in that** the filter medium (12) is provided with a layer (18) of granular material interposed between two webs (20, 22) of synthetic material, the filter medium (12) being delimited by at least one free edge (12A, 12B), the two webs (20, 22) being joined along the free edge.

14. Air filtration device according to Claim 13, **characterized in that** the support (13) comprises substantially mutually parallel planar air pipe walls (14, 16), referred to as longitudinal walls, satisfying the rigidity relationship, the filter medium (12) extending between these longitudinal walls.

15. Air filtration device according to Claim 14, **characterized in that** the support (13) additionally comprises two substantially mutually parallel planar air pipe walls (30, 32) referred to as transverse walls, satisfying the rigidity relationship, the transverse walls (30, 32) being substantially perpendicular to the longitudinal walls (16,14) so as to more or less form a rectangular parallelepiped.

16. Air filtration device according to any one of Claims 13 to 15, **characterized in that** each planar air pipe wall (14, 16; 30, 32) is made from a synthetic material of the thermoplastic polymer type.

17. Air filtration device according to Claim 16, **characterized in that** the thermoplastic polymer is chosen from a polypropylene, a polyethylene, a polyamide, a polyester, notably a polyethylene terephthalate or a polybutylene terephthalate, and a polycarbonate.

18. Installation for circulating air in a motor vehicle, **characterized in that** it comprises a filtration device (10) according to any one of Claims 13 to 17.

19. Installation according to Claim 18, **characterized in that** it supplies an interior of the vehicle with air which may or may not be air conditioned.

**Fig. 1**

EP 1 606 035 B1

**Fig. 2**

**Fig. 3**

**Fig. 4**

**Fig. 5**

**Fig. 6**

EP 1 606 035 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0961702 A